# EUROPEAN PATENT SPECIFICATION

(11) **EP 0 397 191 B1**
(45) Date of publication and mention of the grant of the patent: **21.09.1994**
(21) Application number: 90108903.7
(22) Date of filing: 11.05.1990
(51) Int. Cl.: F02B 23/06, F02F 3/26

(54) **Combustion chamber for compression ignition internal combustion engine**
Brennraum für Brennkraftmaschine mit Selbstzündung
Chambre de combustion pour moteur à combustion interne à allumage par compression

(30) Priority: 12.05.1989 CS 2858/89
(43) Date of publication of application: 14.11.1990
(73) Proprietor: AVIA KONCERN PRAHA, Praha (CZ)
(72) Inventor: Brychta, Laroslav, Praha (CS); Lutisan, Eduard, Praha (CS); Jirkovsky, Vladimir, Praha (CS)
(74) Representative: Beetz & Partner Patentanwälte

(56) References cited:
- DE-A- 2 025 804
- DE-A- 3 018 577

## Description

The invention relates to a piston for an internal combustion engine of a compression ignition type according to the first portion of claim 1.

From DE-A-2 025 804 it is known such a combustion chamber formed in the piston head of an internal combustion engine with a multi-jet fuel injection and compression ignition. Said combustion chamber is centrically disposed in the piston head and bordered by a cylindrical or small conical side wall. In the chamber bottom there are formed two semitoroidal recesses disposed concentrically to the piston axis. In the central portion of the inner recess there is disposed a conical plug acting as jet distributor for the central fuel jet of a multi-hole injection nozzle. The inner semitoroidal recess is separated against the outer semitoroidal recess by a circular border. In said combustion chamber there will be generated an intensive turbulence especially in the middle portion of the combustion room. The conical plug in the central area of the chamber bottom reduces the volume of the inner recess and in connection with a central fuel jet a relatively rich mixture will be raised in the central portion of the combustion chamber.

DE-A-30 18 577 discloses another piston for compression ignition engines with direct fuel injection by multi-hole injection nozzles. The combustion chamber is eccentrically disposed in the piston head and equipped in the central area of the chamber bottom with a conical projection which serves together with a further shaping of the combustion chamber for creating a fuel mixture whirl. With respect to the reduction of volume of the central part of the combustion chamber where is the leanest fuel mixture after the injection, a faster combustion occurs of the fuel mixture, which unfavourably influences the speed of increase in the combustion pressures.

All these known combustion chambers are capable to provide a whirling action and a suitable distribution of fuel mixture in the combustion chamber for ensuring a good ignition of the mixture. For an improved increase of the combustion pressure said combustion chambers are usually arranged co-axially with the cylinder axis or misaligned to said axis by a maximum of 0,2 times of the combustion chamber diameter. If the misalignment of the combustion chamber is larger, the whirl splits during the air filling in a plurality of whirls, which influences unfavourably the composition and distribution of the fuel mixture in the combustion chamber and injures the ignition and increases the combustion pressures, the specific fuel consumption and harmful emissions.

And besides a larger misalignment of the combustion chamber is desirable with respect to the requirement of a larger misalignment of the injection jet which enables an uncompromising location of the suction and exhaust channel in the engine cylinder head and valve gear.

The object of the invention is to provide a combustion chamber for direct fuel injection by the multi-hole injection jet maintaining an undisturbed filling whirl in the combustion chamber even if the misalignment of the chamber axis to the piston axis will be larger than 0,2 times of the combustion chamber diameter, and good creation and distribution of fuel mixture with an easier ignition of fuel, unfortunately not without an increase of the combustion pressure and the noise, and having the capability of a larger misalignment in the location of the injection jet and the simplification of the construction of the head together with the capability of optimal arrangement for the suction and exhaust channels and the valve gears.

Said object will be solved according to the invention by the features of claim 1.

Advantageously the volume of the central recess should be 2 - 10 % of the volume of the entire combustion chamber in the piston head.

From the viewpoint of manufacturing, it is advantageous when the peripheral recess in the chamber bottom has a semitoroidal shape and created by the rotation of a hemispherical arc around the combustion chamber axis. The central recess in the chamber bottom should be hemispherical and the following should be adhered to: the radius of the arc forming the peripheral recess 0,4 to 0,55 times of the distance of its center from the combustion chamber axis, the peripheral recess in the chamber bottom is smoothly followed by the rotary side wall surface whose creating straight line and the combustion chamber axis contains an angle of 0,0 to 20° whose vertex is above the piston.

An example of the combustion chamber according to the invention will be described with the aid of the enclosed schematical drawings. There show:
Fig. 1 an axial section A-A of a piston;
Fig. 2 a top view of the piston.

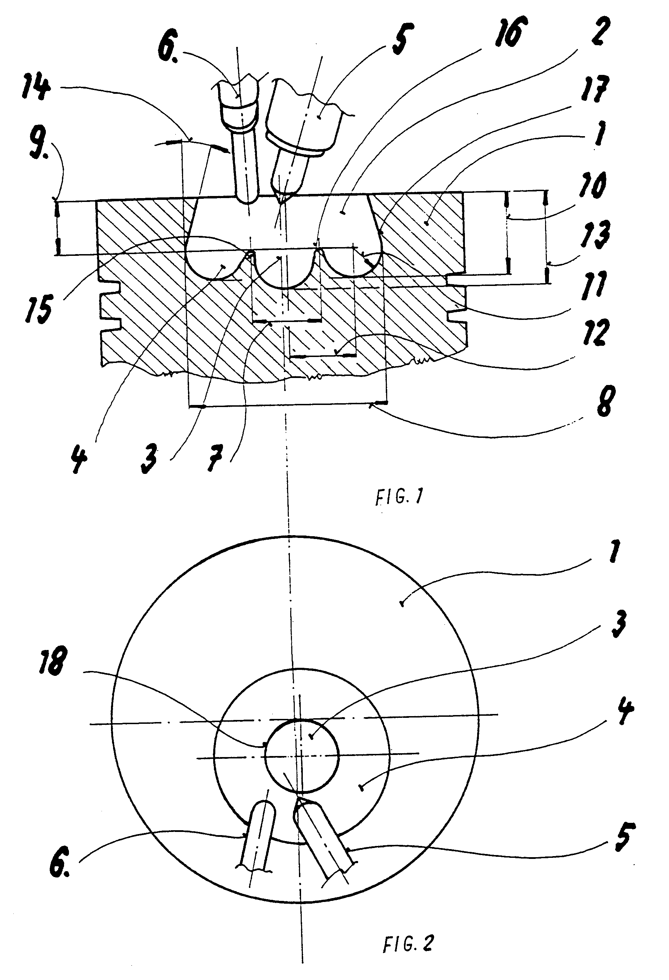

According to Fig. 1, there is formed in a piston head 1 a combustion chamber 2 bordered by a rotary side wall 17 and a shaped bottom having a peripheral semitoroidal recess 4 passing on its internal circumference in the top 16 of a barrier 15. The circular barrier 15 encircles a hemispherical central recess 3. The bottom of the combustion chamber 2 means the surface located under the plane in which the top circle 18 of the barrier 15 lies. The rotary side wall 17 of the combustion chamber 2 forms the surface above this plane. The rotary side wall 17 is advantageously shaped as a truncated cone opening towards the bottom of the combustion chamber 2 and whose flange and the cylinder axis form an angle 14 in the range of 0 to 20°. To the rotary side wall 17 starts the peripheral recess 4 of the bottom geometrically formed by rotation of the radius 11 circular arc at the radius 12 around the axis of the combustion chamber 2. The central recess 3 of the bottom of the combustion chamber 2 has a hemispherical shape and is geometrically formed by the rotation of a circular arc of a diameter 7 around the combustion chamber axis. The peripheral toroidal recess 4 and the central recess 3 in the bottom of the combustion chamber 2 form between them the circular barrier 15.

The volume of the central recess 3 in the chamber bottom makes 2 to 10 % of the entire volume of the combustion chamber. The distance between the top 16 of the barrier 15 and the upper planar surface of the piston 1 ("the piston bottom") is called the depth 9 of the barrier top; the distance of the lowest point of the peripheral recess 4 from the upper piston surface is called the deepest depth 10 of the peripheral recess 4 and the distance of the lowest point of the central recess 3 from the upper piston surface 1 is called the deepest depth 13 of said recess 3. The ratio between the depth 9 of the top 16 of the barrier 15 and the deepest depth 10 of the peripheral recess 4 is in the range of 0,4 to 0,7; the ratio between the largest diameter 7 of the central recess 3 and the largest diameter 8 of the peripheral recess 4 is in the range of 0,25 to 0,45; and the ratio between the deepest depth 13 of the central recess 3 and the deepest depth 10 of the peripheral recess 4 is in the range of 0,85 to 1,15.

In Fig. 1 and Fig. 2 there is schematically shown also the position of a heating plug 6 for a multi-hole injection jet 5 which is located with a large eccentricity from the axis of the piston 1 in the cylinder head (not shown) and entering the peripheral part of the combustion chamber 2.

The function of the compression ignition engine with the combustion chamber according to the invention is as follows:
After suction of air into the cylinder the compression stroke follows, during which the air in the combustion chamber 2 is being set into a rotary whirl predominantly shaped by the barrier 15 with circle plan and also shaped by the rotary side wall surface 17 and the bottom as well.

After the injection of fuel by the multi-hole injection jet 5 into the whirling air filling, due to the shaped whirl and the division of the bottom of the combustion chamber into the peripheral and internal parts, there occurs the creation of the homogeneous rich fuel mixture at the periphery of the combustion chamber 2 and of the lean fuel mixture in the middle of the combustion chamber. After the ignition of the fuel mixture at the periphery of the combustion chamber 2 the substantially leaner fuel mixture from the central part of the combustion chamber 2, predominantly from the volume of the central recess 3 is being brought into the process. This controls the process of combustion, so that it is possible to obtain minimum specific fuel consumptions, low increases in the combustion pressures and low harmful emissions in the exhaust gases. The known heating plug 6 can be located advantageously in the peripheral part of the combustion chamber 2 where optimum conditions for the ignition of fuel mixture exist.

## Claims

1. Piston for an internal combustion engine of a compression ignition type with direct multi-jet fuel injection, comprising a combustion chamber (2) in the piston head (1) bordered by a cylindrical or conical side wall and by a chamber bottom, in which are formed a peripheral semitoroidal recess (4) and an inner recess (3) disposed in the central portion of the combustion chamber (2) and separated from the peripheral recess (4) by a circular barrier (15),
**characterized** in that
- the inner recess (3) has a substantially hemispherical shape,
- the ratio between the depth (9) of the top (16) of the barrier (15) and the deepest depth (10) of the peripheral recess (4) is in a range of 0,4 to 0,7;
- the ratio between the largest diameter (7) of the inner recess (3) and the largest diameter (8) of the peripheral recess (4) is in a range of 0,25 to 0,45 and
- the ratio between the deepest depth (13) of the inner recess (3) and the deepest depth (10) of the peripheral recess (4) is in a range of 0,85 to 1,15.

2. Piston according to claim 1,
characterized in that
the peripheral recess (4) is shaped by the rotation of a hemispherical arc of a radius (11) around the combustion chamber axis.

3. Piston according to claim 1 or 2,
characterized in that
the combustion chamber (2) is misaligned from the piston axis by a distance larger than 0,2 times the combustion chamber diameter (8).

4. Piston according to claims 1 to 3,
characterized in that
the volume of the central recess (3) is 2 to 10 % of the volume of the entire combustion chamber (2).

5. Piston according to claims 1 to 4,
characterized in that
the peripheral recess (4) smoothly follows the side wall (17) of the combustion chamber (2) and the angle between an extension of the straight wall of the chamber (2) and the combustion chamber axis is 0 to 20°, the vertex being above the piston (1).

## Patentansprüche

1. Kolben für eine Brennkraftmaschine mit Selbstzündung und direkter mehrstrahliger Kraftstoffeinspritzung, enthaltend eine Brennkammer (2) im Kolbenkopf (1), die von einer zylindrischen oder konischen Seitenwand und einem Kammerboden begrenzt wird, in welchem eine umlaufende semitoroidale Ausnehmung (4) und eine innere Ausnehmung (3) ausgebildet sind, wobei die innere Ausnehmung (3) im zentralen Teil der Brennkammer (2) angeordnet und von der peripheren Ausnehmung (4) durch eine ringförmige Barriere (15) abgetrennt ist,
dadurch gekennzeichnet, daß
- die innere Ausnehmung (3) eine im wesentlichen halbkugelförmige Form hat,
- das Verhältnis zwischen der Tiefe (9) des oberen Endes (16) der Barriere (15) und der größten Tiefe (10) der peripheren Ausnehmung (4) in einem Bereich von 0,4 bis 0,7 liegt,
- das Verhältnis zwischen dem größen Durchmesser (7) der inneren Ausnehmung (3) und dem größten Durchmesser (8) der peripheren Ausnehmung (4) in einem Bereich von 0,25 bis 0,45 liegt und
- das Verhältnis zwischen der größten Tiefe (13) der inneren Ausnehmung (3) und der größten Tiefe (10) der peripheren Ausnehmung (4) in einem Bereich von 0,85 bis 1,15 liegt.

2. Kolben nach Anspruch 1,
dadurch gekennzeichnet, daß
die periphere Ausnehmung (4) durch die Rotation eines halbkugelförmigen Bogens vom Radius 11 um die Brennkammerachse geformt ist.

3. Kolben nach Anspruch 1 oder 2,
dadurch gekennzeichnet, daß
die Brennkammer gegenüber der Kolbenachse um einen Abstand von größer 0,2 mal dem Brennkammerdurchmesser (8) versetzt ist.

4. Kolben nach Anspruch 1 bis 3,
dadurch gekennzeichnet, daß
das Volumen der zentralen Ausnehmung (3) 2 - 10 % des Volumens der gesamten Brennkammer (2) beträgt.

5. Kolben nach Anspruch 1 bis 4,
dadurch gekennzeichnet, daß
die periphere Ausnehmung (4) gleichförmig der Seitenwand (17) der Brennkammer (2) folgt und der Winkel zwischen einer Verlängerung der geraden Seitenwand der Kammer (2) und der Brennkammerachse 0 bis 20 ° beträgt, wobei der Scheitel oberhalb des Kolbens (1) liegt.

## Revendications

1. Piston pour un moteur à combustion interne du type à allumage par compression avec une injection de carburant à jets multiples directe, comportant une chambre de combustion (2) dans la tête de piston (1) bordée par une paroi latérale cylindrique ou conique et par un fond de chambre, dans laquelle sont formées une cavité semi-toroïdale périphérique (4) et une cavité intérieure (3) disposée dans la partie centrale de la chambre de combustion (2) et séparée de la cavité périphérique (4) par une barrière d'arrêt circulaire (15),
caractérisé en ce que
- la cavité intérieure (3) a une forme substantiellement hémisphérique,
- le rapport entre la profondeur (9) du sommet (16) de la barrière d'arrêt (15) et la profondeur la plus grande (10) de la cavité périphérique (4) est compris dans une plage située entre 0,4 et 0,7,
- le rapport entre le plus grand diamètre (7) de la cavité intérieure (3) et le plus grand diamètre (8) de la cavité périphérique (4) est compris dans une plage située entre 0,25 et 0,45, et
- le rapport entre la profondeur la plus grande (13) de la cavité intérieure (3) et la profondeur la plus grande (10) de la cavité périphérique (4) est compris dans une plage située entre 0,85 et 1,15.

2. Piston selon la revendication 1, caractérisé en ce que la cavité périphérique (4) est mise en forme par la rotation d'un arc hémisphérique ayant un rayon (11) autour de l'axe de la chambre de combustion.

3. Piston selon la revendication 1 ou 2, caractérisé en ce que la chambre de combustion (2) a un alignement décalé par rapport à l'axe du piston d'une distance supérieure à 0,2 fois le diamètre de la chambre de combustion (8).

4. Piston selon les revendications 1 à 3, caractérisé en ce que le volume de la cavité centrale (3) est compris entre 2 et 10% du volume de la totalité de la chambre de combustion (2).

5. Piston selon les revendications 1 à 4, caractérisé en ce que la cavité périphérique (4) suit de façon régulière la paroi périphérique (17) de la chambre de combustion (2), et l'angle entre une extension de la paroi droite de la chambre (2) et l'axe de la chambre de combustion est compris entre 0 et 20°, sa pointe étant située au-dessus du piston (1).
